# EUROPEAN PATENT SPECIFICATION

(11) **EP 0 364 183 B1**
(45) Date of publication and mention of the grant of the patent: **30.03.1994**
(21) Application number: 89310288.9
(22) Date of filing: 09.10.1989
(51) Int. Cl.: A01N 43/02, A01H 1/02

(54) **Chemical hybridisation of dicots**
Chemische Hybridisierung von Dikotylen
Hybridation chimique des dicotylédones

(30) Priority: 14.10.1988 GB 8824144
(43) Date of publication of application: 18.04.1990
(73) Proprietor: ZENECA LIMITED, London W1Y 6LN (GB)
(72) Inventor: Sutra, Gerard, F-71500 Toulouse (FR); Warner, Harlow L., Hatboro Pennsylvania 19040 (US)
(74) Representative: Roberts, Timothy Wace

(56) References cited:
- EP-A- 0 040 082
- GB-A- 2 145 411

## Description

The present invention relates to a method of inducing male sterility in dicotyledonous plant species for the production of hybrid seeds by the application of substituted oxonicotinates. The substituted oxonicotinates of the present invention have previously been disclosed in EP 40082-A to be effective as chemical sterilants for the production of hybrid seed of monocotyledonous crop plants, for plant breeding purposes, the agricultural production of ergot and as plant growth regulating compositions. The applicants have now discovered that the compounds of the invention are effective chemical hybridisation agents in dicotyledonous plants.

GB 2145411 discloses certain gametocidal pyridazinylcarboxylic acid derivatives useful for influencing generative plant growth and for producing male sterile plants. EP-A-0037133 discloses certain gametocidal pyridazinone compounds useful for sterilizing the male anthers of plants including small grain cereal plants and using them as a method of producing F1 hybrid seed. EP-A-0138662 discloses certain 3-carboxyalkyoxyaminocarbonylpyridazines useful as pollen suppressants for cereal grain plants and their use for producing hybrid seed. EP-A-0138663 discloses certain pyridazolyamines as pollen suppressants for cereal grain plants and their use for producing hybrid seed.

Dicotyledonous plants provide an important source of food for humans and animals and raw materials for industry.

In particular crops such as soybean, sunflower, oilseed rape, sugarbeet, cotton, potato and various other staple vegetables.

Dicotyledonous plants differ from cereal crops which are monocotyledonous plants in many physiological aspects which are well known to the plant scientist. Previous disclosures have described effective chemical hybridisation activity in monocotyledonous plants, however, this activity has not been previously shown in dicotyledonous species for the compounds of the present invention.

EP 40082-A discloses hybridisation effects on cereal grain crops and other plant growth regulator effects in non-cereal species. Hybridisation is achieved through inducement of male sterility where this term includes both actual male sterility, as evidenced by a lack of male flower parts or by sterile pollen, and functional male sterility, in which the male flower parts are unable to cause pollination. Other plant growth regulator effects are likely to be a consequence of the action of the compounds on plant growth hormones. This invention is concerned only with chemical hybridisation of dicotyledonous species and inducement of male sterility therein.

According to the present invention there is provided a method of inducing male sterility in an agricultural or horticultural dicotyledonous plant which comprises treating the plant prior to, during or post meiosis with an amount, which is effective to produce male sterility in the plant, of at least one compound of the formula: 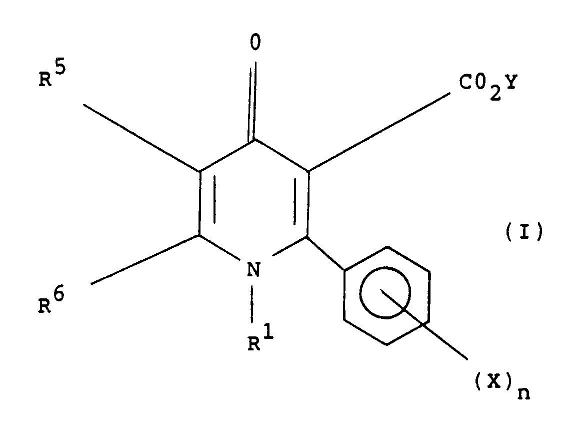
wherein R¹ is (C₁-C₆) alkyl or (C₂-C₆) alkenyl, each optionally substituted with a group selected from hydroxy, carboxy, carboxy salt, phenyl and phenyl substituted with up to two of the same or different substituents selected from halogen, methyl, ethyl, methoxy, ethoxy, trifluoromethyl, nitro, and cyano;
R⁵ is hydrogen, (C₁-C₆) alkyl or halogen;
R⁶ is hydrogen, or (C₁-C₆) alkyl;
X is halogen, trihalomethyl, (C₁-C₆) alkyl, nitro, cyano or (C₁-C₆) alkoxy;
n is 0 or an integer of 1-3; and
Y is hydrogen or (C₁-C₆) alkyl;
and agronomically acceptable acid addition salts; and carboxy salts of compounds of formula (I) where Y is hydrogen, having an agronomically acceptable cation.

Carboxy salts may be those of lithium, sodium, potassium, an alkaline earth metal, ammonium or substituted ammonium for example tris (2-hydroxy-ethyl)ammonium. Acid addition salts may be formed with acids such as hydrochloric, hydrobromic, sulphuric, nitric, perchloric, acetic and oxalic acids.

The alkyl and alkenyl groups in the compounds of formula (I) may be straight or branched chain.

Preferred compounds of the invention are those of formula (II) together with acid addition salts thereof, 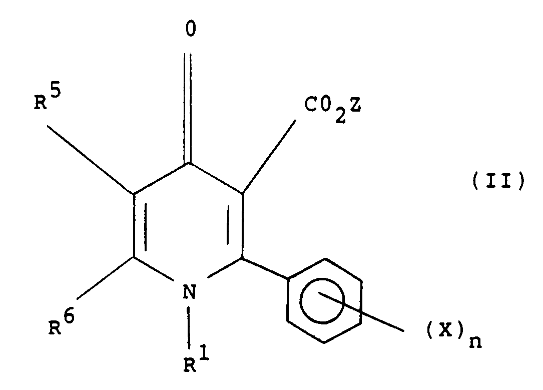
wherein Z is hydrogen or an alkali metal and R¹, R⁵, R⁶, X and n are as defined above.

The preferred compounds of formula (II) are those wherein R¹ is (C₁-C₆) alkyl or allyl, R⁵ is hydrogen, (C₁-C₃) alkyl or bromine, R⁶ is (C₁-C₆)alkyl, Z is hydrogen or a sodium or potassium cation, X is halogen and n is 0 or the integer 1 or 2.

The more preferred compounds of formula (II) are those wherein R¹ is (C₁-C₃) alkyl, R⁵ is hydrogen, R⁶ is (C₁-C₃) alkyl, Z is hydrogen or a sodium or potassium cation, X is chlorine or fluorine and n is 0 or the integer 1 or 2.

The most preferred compounds of formula (II) are those wherein R¹ is methyl or ethyl; R⁵ is hydrogen, R⁶ is methyl; and Z is a sodium or potassium cation and the agronomically acceptable acid addition salts thereof.

Typical compounds of the invention include:
1,6-dimethyl-2-phenyl-4-oxonicotinic acid
1-ethyl-6-methyl-2-phenyl-4-oxonicotinic acid
1,5,6-trimethyl-2-phenyl-4-oxonicotinic acid
1,6-diethyl-2-phenyl-4-oxonicotinic acid
6-ethyl-1-methyl-2-phenyl-4-oxonicotinic acid
1-methyl-2-phenyl-6-propyl-4-oxonicotinic acid
5-bromo-1,6-dimethyl-2-phenyl-4-oxonicotinic acid
1-allyl-6-methyl-2-phenyl-4-oxonicotinic acid
1,6-dimethyl-2-(4-chlorophenyl)-4-oxonicotinic acid
1-ethyl-6-methyl-2-(4-chlorophenyl)-4-oxonicotinic acid
1-ethyl-5,6-dimethyl-2-(4-chlorophenyl)-4-oxonicotinic acid
1,6-diethyl-2-(4-chlorophenyl)-4-oxonicotinic acid
6-ethyl-1-methyl-2-(4-chlorophenyl)-4-oxonicotinic acid
5-bromo-1-ethyl-6-methyl-2-(4-chlorophenyl)-4-oxonicotinic acid
1-allyl-6-methyl-2-(4-chlorophenyl)-4-oxonicotinic acid
6-methyl-2-(4-chlorophenyl)-1-propyl-4-oxonicotinic acid
1-butyl-6-methyl-2-(4-chorophenyl)-4-oxonicotininc acid
1,6-dimethyl-2-(3-chlorophenyl)-4-oxonicotinic acid
1-ethyl-6-methyl-2-(3-chlorophenyl)-4-oxonicotinic acid
6-methyl-2-(3-chlorophenyl)-1-propyl-4-oxonicotinic acid
1-ethyl-5,6-dimethyl-2-(3-chlorophenyl)-4-oxonicotinic acid
5-chloro-1-ethyl-6-methyl-2-(3-chlorophenyl)-4-oxonicotinic acid
1-hexyl-6-methyl-2-(3-chlorophenyl)-4-oxonicotinic acid
1-allyl-6-ethyl-2-(3-chlorophenyl)-4-oxonicotinic acid
1,6-diethyl-2-(3-chlorophenyl)-4-oxonicotinic acid
1-ethyl-6-methyl-2-(4-trifluoromethylphenyl)-4-oxonicotinic acid
1,6-dimethyl-2-(4-fluorophenyl)-4-oxonicotinic acid
1-ethyl-6-methyl-2-(4-fluorophenyl)-4-oxonicotinic acid
1-ethyl-6-methyl-2-(3-fluorophenyl)-4-oxonicotinic acid
1-ethyl-6-methyl-2-(4-bromophenyl)-4-oxonicotinic acid
1,6-dimethyl-2-(3,4-dichlorophenyl)-4-oxonicotinic acid
1-ethyl-6-methyl-2-(3,4-dichlorophenyl)-4-oxonicotinic acid
6-methyl-2-(3,4-dichlorophenyl)-1-propyl-4-oxonicotinic acid
6-methyl-1-pentyl-2-(3,4-dichlorophenyl)-4-oxonicotinic acid
6-ethyl-1-methyl-2-(3,4-dichlorophenyl)-4-oxonicotinic acid
1-ethyl-2-(3,4-dichlorophenyl)-6-propyl-4-oxonicotinic acid
1,5,6-trimethyl-2-(3,4-dichlorophenyl)-4-oxonicotinic acid
5-bromo-1,6-dimethyl-2-(3,4-dichlorophenyl)-4-oxonicotinic acid
1,5-diethyl-6-methyl-2-(3,4-dichlorophenyl)-4-oxonicotinic acid
5-ethyl-1,6-dimethyl-2-(3,4-dichlorophenyl)-4-oxonicotinic acid
1-ethyl-6-methyl-2-(2,4-dichlorophenyl)-4-oxonicotinic acid
1,6-dimethyl-2-(3,5-dichlorophenyl)-4-oxonicotinic acid
1-ethyl-6-methyl-2-(4-methylphenyl)-4-oxonicotinic acid
6-butyl-1-methyl-2-(4-methylphenyl)-4-oxonicotinic acid
and the agronomically acceptable salts thereof.

The compounds of formula (I) can be prepared by the methods outlined in EP 40082-A or known methods for analogous compounds. The physical properties of the compounds in question can be found in Tables I, II and III of EP 40082-A.

The compounds of formula (I) are particularly useful as chemical hybridisation agents in dicotyledonous crops, such as sunflower, safflower, sugar beet, soybean, rape and cotton. As chemical hybridisation agents, the compounds effectively induce a high degree of selective male sterility, that is without also inducing significant female sterility, in the treated plants and without causing significant growth inhibition of the treated plants. As used herein, the term male sterility includes both actual male sterility, as evidenced by a lack of male flower parts or by sterile pollen, and functional male sterility, in which the male flower parts are unable to cause pollination.

The compounds are applied in any amount which will be sufficient to effect the desired plant response without causing any undesirable or phytotoxic response. The compounds are generally applied to the crops to be treated at a rate of 0.035 to 22 kg per hectare and preferably 0.1 to 12 kg per hectare. The rate of application will vary depending on the crop being treated, the compound being used for treatment and factors related to the environment.

To obtain hybrid seed, the following procedure is generally employed. The two parents to be crossed are planted in alternate strips. The female parent is treated with a compound of formula (I). The male sterile parent thus produced will be pollinated by pollen from male-fertile parent, and the seed produced by the male-sterile parent will be hybrid seed which can then be harvested by conventional means.

The compound of formula (I) can be applied to the plant by foliar application. This method is most effective for inducing male sterility when the compound is applied between flower initiation and meiosis or post meiosis. The compounds of formula (I) can also be applied by soaking the seed in a liquid formulation containing the active compound or by coating the seed with the compound. In seed treatment applications, the compounds of formula (I) will generally be applied at a rate of about 0.25 to 10 kg per hundred kg of seed. The compounds may also be applied to the soil as granules with corresponding root-uptake of active ingredient.

The compounds of formula (I) can be used as hybridisation agents together, for example, in admixtures with other plant growth regulators such as auxins (eg, indoleacetic acid, indolebutyric acid, naphthoxyacetic acid or naphthylacetic acid), quinchlorac, quinmerac, gibberellins (eg,GA₃, GA₄, or GA₇), ethylene-releasing agents such as ethephon, pyridones, cytokinins (eg, kinetin, diphenylurea, benzimidazole, benzyladenine or benzylaminopurine), maleic hydrazide, succininc acid, phenoxyacetic acids (eg, 2,4-D or MCPA), 2,2- dimethylhydrazide, choline and its salts, (2-chloro-ethyl)trimethylammonium chloride, substituted benzoic acids (eg, triiodobenzoic acid), tributyl-2,4-dichlorobenzyl-phosphonium chloride, polymeric N-vinyl-2-oxazolidinones, tri(dimethylaminoethyl)phosphate and its salts, and N-dimethylamino-1,2,3,6-tetrahydrophthalamic acid and its salts, morphactins (eg, chlorfluorecol), glyphosate, glyphosine, long chain fatty alcohol and acids, dikegulac, fluoridamid, mefluidide, mepiquat, carbetamide, methyl-3,6-dichloroanisate, daminozide, asulam, abscisic acid, isopyrimol, difenzoquat, benzoylpropethyl 3,6- dichloropicolinic acid, fenpentezol, uniconazole, triapenthanol, flurpirimidol, paclobutrazol, tetcyclacis, forchorfenuron and tecnazene. Under some conditions the compounds of formula (I) may be used advantageously with agricultural pesticides such as herbicides, fungicides, insecticides and plant bactericides.

One or more of the compounds of formula (I) can be applied to the growth medium or to the plants to be treated either by itself or themselves in a gametocidal composition or, as is generally done, as a component in a growth regulant composition or formulation which also comprises an agronomically acceptable carrier or diluent. By "agronomically acceptable carrier" is meant any substance which can be used to dissolve, disperse, or diffuse a compound in the composition without impairing the effectiveness of the compound and which by itself has no detrimental effect on the soil, equipment, crops, or agronomic environment. The growth regulant compositions can be either solid or liquid formulations or solutions. For example, the compounds can be formulated as wettable powders, emulsifiable concentrates, dusts, granular formulations, aerosols, or flowable suspension or emulsion concentrates. In such formulations, the compounds are extended with a liquid or solid carrier, and, when desired suitable surfactants are incorporated.

It is usually desirable, particularly in foliar applications, to include adjuvants, such as wetting agents, spreading agents, dispersing agents, stickers, adhesives, and the like, in accordance with agricultural practices.

The compounds of formula (I) can be dissolved in any appropriate solvent. Examples of solvents which are useful in the practice of this invention include water, alcohols, glycol ethers, esters, ketones, aromatic hydrocarbons, halogenated hydrocarbons, dimethylformamide, dioxane and dimethyl sulphoxide. Mixtures of these solvents can also be used. The concentration of the solution can vary from about 2% to about 98% by weight with a preferred range being about 20% to about 75%.

For the preparation of emulsifiable concentrates, the compound can be dissolved in organic solvents, such as benzene, toluene, xylene, methylated naphthalene, corn oil, pine oil, o-dichlorobenzene, isophorone, cyclohexanone or methyl oleate, or in mixtures of these solvents, together with an emulsifying agent or a surfactant which permits dispersion in water. Suitable emulsifiers include, for example, the ethylene oxide derivatives of alkylphenols or long-chain alcohols, mercaptans, carboxylic acids, and reactive amines and partially esterified polyhydric alcohols. Solvent-soluble sulphates or sulphonates, such as the alkaline earth salts or amine salts of alkylbenzenesulphonates and the fatty alcohol sodium sulphates, having surface-active properties can be used as emulsifiers either alone or in conjunction with an ethylene oxide reaction product. Flowable emulsion concentrates are formulated similarly to the emulsifiable concentrates and include, in addition to the above components, water and a stabilising agent such as a water soluble cellulose derivative or a water-soluble salt of a polyacrylic acid.

The concentration of the active ingredient in emulsifiable concentrates is usually about 10% to 60%, or even as high as 75%, by weight. Aqueous suspension concentrates can be used by fine grinding of the active ingredient as a suspension in water, with the addition of dispersing agents and the like.

Wettable powders suitable for spraying, can be prepared by admixing the active compound with a finely divided solid, such as clays, in organic silicates and carbonates, and silicas and incorporating wetting agents sticking agents, and/or dispersing agents in such mixtures. The concentration of active ingredients in such wettable powder is usually in the range of about 20% to 98% by weight, preferably about 40% to 75%. A dispersing agent may generally constitute about 0.5% to about 3% by weight of the wettable powder, and a wetting agent may generally constitute from about 0.1% to about 5% by weight of the composition.

Water disperable grains can be prepared by the same process as for wettable powders, followed by extrusion or agglomeration to produce free flowing grains which are non-dusty and redisperse into water. The resulting dispersion can be sprayed by normal means.

Dusts can be prepared by mixing the active compounds with finely divided inert solids which may be organic or inorganic in nature. Materials useful for this purpose include, for example, botanical flours, silicas, silicates, carbonates and clays. One convenient method of preparing a dust is to dilute a wettable powder with a finely divided carrier. Dust concentrates containing about 20% to 80% of the active ingredient are commonly made and are subsequently diluted to about 1% to 10% by weight use concentration.

Granular formulations can be prepared by impregnating a solid such as granular fuller's earth, vermiculite, attapulgite, gypsum, pumice, sand, limestone, ground corn cobs, seed hulls, including bran or other grain hulls or similar material. A solution of one or more of the compounds in a volatile organic solvent can be sprayed or mixed with the granular solid and the solvent then removed by evaporation. The granular material can have any suitable size, with a preferable size range of 16 to 60 mesh (U.S Standard Sieve Series). The active compound will usually comprise about 2 to 15% by weight of the granular formulation. Granules can also be obtained by extruding or pelletting powdered combinations of active ingredient and mineral fillers or salts, using suitable binding agents such as water, polyglycols, lignosulphonates, polymers and resin solutions and the like and coating onto fertilizer prills and the like.

Salts of the compounds of the invention can be formulated and applied as aqueous solutions or oil emulsifiable concentrates. The salts will typically comprise about 0.05 to about 50% by weight, preferably about 0.1% to about 10%, of the solution. These compositions can also be further diluted with water if desired prior to actual application. In some applications, the activity of these compositions can be enhanced by incorporating into the compositions an adjuvant such as glycerin, methylethyl-cellulose, hydroxyethylcellulose, polyoxyethylenesorbitan monooleate, polypropylene glycol, polyacrylic acid, polyethylene sodium malate or polyethylene oxide. The adjuvant will generally comprise about 0.1 to about 5% by weight, preferably about 0.5 to about 2% of the composition. Such compositions can also optionally include an agronomically-acceptable surfactant.

Typical salts include sodium, potassium, ammonium and amine salts which are water soluble. Long chain amine salts, for example, C₈-C₁₈ amine can be dissolved in oils and applied as emulsifiable concentrates or by low-volume techniques including Electrodyn (Registered Trade Mark).

The compounds of formula (I) can be applied as sprays by methods commonly used, such as conventional hydraulic sprays, aerial sprays, and dusts. For ultra-low or low-volume applications a solution of the compound is usually used. The dilution and volume of application will usually depend upon such factors as the type of equipment employed, the method of application, the area to be treated and the type and stage of development of the crop being treated. Oil solutions, suspensions, water-in-oil emulsions, microemulsions and microcapsules can be applied low-volume and undiluted through spinning disc atomisers, or by the electrodynamic spray system.

The following example illustrate the chemical hybridisation activity of the compounds of formula (I) on dicotyledonous species.

### EXAMPLE 1

The object of this test is to determine the efficacy of compound 1, of Table I as a male sterilant on sunflower, a dicotyledonous species.

### Methodology

Sunflower hybrid S-316 was planted in 2 single rows 76 cm apart and 45.7 metres long. When the plants were 30.5 cm, they were thinned to groups of three, 30.5 cm apart with 70 cm between groups. The compound was applied with a hand-held backpack sprayer fitted with two 80015E flat fan spray tips 45.7 cm apart, delivering 449 lha⁻¹ at 25.4 cm spray height.

The compound was applied when the flower buds averaged 3-4 cm in diameter. At an average of 6-7 cm diameter, the ray flowers had started to unfurl. At this time cheesecloth was draped over the head and fastened around the stem with a twist-tie. Bags were re-adjusted as the heads expanded. In each group, the two outer heads were bagged with the middle head left open for cross-pollination. The normal insect population was utilized for pollination. At maturity, the heads were hand harvested and the seed removed manually.

Sterility was determined by a reduction in 100 seed weight and germination. Unlike wheat, sterile florets develop an achene which is collapsed in appearance. A seed weight reduction of 40% or more (after correction for the effects of bagging) was considered 100% sterile based on visual inspection of representative samples.

A 50 ml volume weight was also determined for each sample, but was not used to determine sterility. Germination and seedling injury were determined on vermiculite planted 50 seed samples of selected treatments for both bagged and unbagged heads.

The results are presented in Table II.

**TABLE I**

| Compound | R¹ | Y | R₅ | R₆ | Xn |
|---|---|---|---|---|---|
| 1 | C₂H₅ | K | H | CH₃ | 4-chlorophenyl |

**TABLE II**

| Rate kg ha⁻¹ | Compound No | (1) | (2) | (3) |
|---|---|---|---|---|
| 8.96 | 1 | 80 | EXCELLENT | FAIR |
| Key (1) Bagged Seed Sterility (determined from 100 seed weight reduction). (2) Unbagged Head Seed Quality (determined from test weight). (3) Unbagged Head Seed Set (determined from germination test). | | | | |

### EXAMPLE 2

The object of this was to investigate the effect of timing and dosage of chemical hybridising agent, Compound No 1 of Table 1, on greenhouse grown soya.

### Methodology

Seedlings of soya, cv Evans were potted up from modular trays into 12.7 cm pots of low organic matter compost.

The chemical was formulated in 0.5% Triton Ag 98 and 2% glycerol and was applied to the plants using a tracksprayer fitted with a 8004E T-jet nozzle. There were two application rates, 4 and 8 kg/ha and there were two application timings V4 and V7 (Fehr Scare). A fifth treatment involved a split timing with 4 kg/ha applied at each timing. At the first timing (V4) the plants' development was significantly pre-meiosis with either none or very few undeveloped flower buds present. At the second timing (V7) the plants' development was just pre-meiosis or with a few nodes at meiosis. A more detailed explanation of the growth stages can be found in Crop Science, Volume 2, pages 929-931 (Fehr Scare).

There were 5 replicates for each treatment. The plants were given nutrient feeds and treated for pests and diseases regularly. Pod set was assessed at maturity.

The results are presented in Table III.

### Discussion

Compound No 1 of Table 1 considerably reduced the number of fertile pods set over the whole soya plant. There were also a high number of small sterile pods. The compound was highly effective at both rates of application and at the split timing. Female fertility could not be assessed because soya is self-pollinating and no cross-pollinating techniques were used in this test.

**TABLE III**

| Timing | Rate (kg/ha) | No of fertile pods |
|---|---|---|
| V4 | 4 | 21.2 |
| V4 | 8 | 13.0 |
| V4 + V7 | 4 + 4 | 16.8 |
| V7 | 4 | 17.6 |
| V7 | 8 | 18.0 |
| V4 | FB | 23.2 |
| V7 | FB | 20.0 |
| - | UT | 24.4 |
| KEY: FB = Formulation Blank UT = Untreated Control | | |

### EXAMPLE 3

The object of this experiment was to investigate the effect of timing and dosage on field grown sunflowers.

### Methodology

This investigation was conducted on two sunflower hybrids, Video and Viky, planted in 2 single rows plots. The experimental design was a randomised block. Compound no. 1 of Table 1 was applied at 3 growth stage timings. at the third stage the plants were tall enough to require the chemical to be applied with a hand held sprayer delivering the same spray volume as the motorised experimental sprayer (500 l/ha). The split application timings were only investigated on hybrid Video.
The application stages were :
1. 6 pairs of leaves.
2. Flower bud being 1.3 cm long.
3. Flower bud being 2.5 cm long.

To assess male sterility, paper bags were placed over between 5 and 8 heads per plot to prevent insect cross-pollination.

At maturity, the bagged heads and a comparable sample of unbagged heads from each plot were hand-harvested, and the seed removed manually.

Male sterility was determined by the reduction in seed set on bagged heads, after correction for the effects of bagging.

The results are presented in Table IV

**TABLE IV**

| Application Stage | Rate (kg/ha) | % Sterility (Viky) | % Sterility (Video) |
|---|---|---|---|
| 1 | 4 | 0 | 0 |
| | 8 | 0 | 0 |
| 2 | 4 | 0 | 50.0 |
| | 8 | 20.0 | 95.5 |
| 3 | 4 | 50.0 | 40.0 |
| | 8 | 99.2 | 98.5 |

### Discussion

The results show that on both hybrids the chemical hybridising agent induced male sterility at approximately 4 kg/ha when applied to plants at stage 3 of development and 8 kg/ha when applied to plants at stages 2 and 3 of development.

## Claims

1. The use, for inducing male sterility in an agricultural or horticultural dicotyledonous plant by treating the plant prior to, during, or post meiosis with an amount effective to produce male sterility in the plant, of a compound of the formula:- 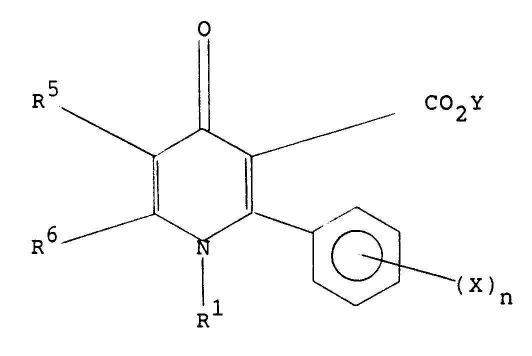 wherein R¹ is (C₁-C₆) alkyl or (C₂-c₆) alkenyl, each optionally substituted with a group selected from hydroxy, carboxy, carboxy salt, phenyl and phenyl substituted with up to two of the same or different substituents selected from halogen, methyl, ethyl, methoxy, ethoxy, trifluoromethyl, nitro, and cyano;
R⁵ is hydrogen, (C₁-C₆) alkyl or halogen;
R⁶ is hydrogen, or (C₁-C₆) alkyl;
X is halogen, trihalomethyl, (C₁-C₆) alkyl, nitro, cyano or (C₁-C₆) alkoxy;
n is 0 or an integer of 1-3; and
Y is hydrogen or (C₁-C₆) alkyl;
and agronomically acceptable acid addition salts;
and carboxy salts of compounds of formula (I) where Y is hydrogen, having an agronomically acceptable cation.

2. The use according to claim 1 of a compound of the formula : 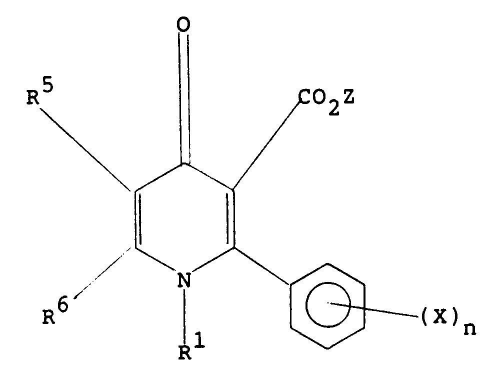 wherein R¹, R⁵, R⁶ X and n are as defined in claim 1 and Z is hydrogen or an alkali metal and the agronomically acceptable acid addition salts thereof.

3. The use according to claims 1 or 2 of a compound as therein defined wherein R¹ is (C₁-C₃) alkyl, R⁵ is hydrogen, R⁶ is (C₁-C₃) alkyl, X is chlorine or fluorine; and n is 0, 1 or 2.

4. The use according to claim 3 of a compound as therein defined wherein R¹ is methyl or ethyl; R⁶ is methyl and Z is sodium or potassium.

5. The use according to claim 4 of a compound as therein defined wherein R1 is ethyl, and (X)ₙ is hydrogen, 4-chloro, 3-chloro, 3,4-dichloro, or 3-fluoro.

6. The use according to claim 5 of a compound as therein defined 5 wherein (X)ₙ is 4-chloro and Z is potassium.

7. The use claimed in any of the preceding claims wherein the dicotyledonous plant is sunflower.

8. A method for the production of hybrid seed of dicotyledonous plants by the crossing of two different parent strains of such plants, the method comprising treating a first male-fertile parent prior to, during or post meiosis with a compound as defined in any of claims 1-6 in amount sufficient to induce male sterility, causing the parent so treated to be pollinated with pollen from a second untreated male-fertile parent, allowing the treated pollinated parent to mature until hybrid seed is formed, and harvesting the hybrid seed.

9. Hybrid dicotyledonous plant seed produced by a method according to claim 8.

## Patentansprüche

1. Verwendung, und zwar zur Herbeiführung männlicher Sterilität in einer landwirtschaftlichen oder gartenbaulichen dikotylen Pflanze durch Behandlung der Pflanze vor, während oder nach der Meiose mit einer zur Erzeugung männlicher Sterilität in der Pflanze wirksamen Menge, einer Verbindung mit der Formel:- 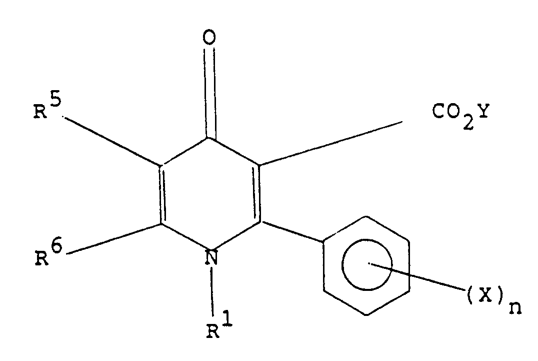 in der R¹ für (C₁-C₆)-Alkyl oder (C₂₋₆)-Alkenyl steht, jedes gegebenenfalls substituiert mit einer Gruppe, die ausgewählt ist aus Hydroxy, Carboxy, Carboxysalz, Phenyl und Phenyl, substituiert mit bis zu zwei gleichen oder unterschiedlichen Substituenten, ausgewählt aus Halogen, Methyl, Ethyl, Methoxy, Ethoxy, Trifluormethyl, Nitro und Cyano;
R⁵ für Wasserstoff, (C₁-C₆)-Alkyl oder Halogen steht;
R⁶ für Wasserstoff oder (C₁-C₆)-Alkyl steht;
X für Halogen, Trihalomethyl, (C₁-C₆)-Alkyl, Nitro, Cyano oder (C₁-C₆)-Alkoxy steht;
n für 0 oder eine ganze Zahl von 1 - 3 steht; und
Y für Wasserstoff oder (C₁-C₆)-Alkyl steht;
und landwirtschaftlich geeignete Säureadditionssalze;
und Carboxysalze von Verbindungen der Formel (I), in der Y für Wasserstoff steht, mit einem landwirtschaftlich geeigneten Kation.

2. Verwendung nach Anspruch 1, und zwar einer Verbindung mit der Formel: 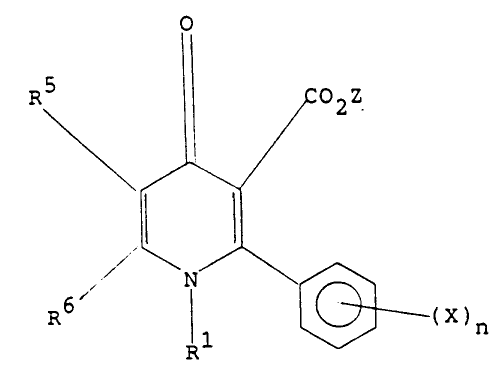 in der R¹, R⁵, R⁶, X und n wie in Anspruch 1 definiert sind und Z für Wasserstoff oder ein Alkalimetall steht und landwirtschaftlich geeignete Säureadditionssalze davon.

3. Verwendung nach den Ansprüchen 1 oder 2, und zwar einer Verbindung wie dort definiert, wobei R¹ für (C₁-C₃)-Alkyl steht, R⁵ für Wasserstoff steht, R⁶ für (C₁-C₃)-Alkyl steht, X für Chlor oder Fluor steht; und n für 0, 1 oder 2 steht.

4. Verwendung nach Anspruch 3, und zwar einer Verbindung wie dort definiert, wobei R¹ für Methyl oder Ethyl steht; R⁶ für Methyl steht und Z für Natrium oder Kalium steht.

5. Verwendung nach Anspruch 4, und zwar einer Verbindung wie dort definiert, wobei R¹ für Ethyl steht und (X)ₙ für Wasserstoff, 4-Chlor, 3-Chlor, 3,4-Dichlor oder 3-Fluor steht.

6. Verwendung nach Anspruch 5, und zwar einer Verbindung wie dort definiert, wobei (X)ₙ für 4-Chlor steht und Z für Kalium steht.

7. Verwendung nach einem der vorhergehenden Ansprüche, wobei es sich bei der dikotylen Pflanze um die Sonnenblume handelt.

8. Verfahren zur Herstellung von Hybridsamen von dikotylen Pflanzen durch Kreuzen von zwei unterschiedlichen Elternstämmen derartiger Pflanzen, bei dem ein erster fruchtbarer männlicher Elternteil vor, während oder nach der Meiose mit einer Verbindung, wie sie in einem der Ansprüche 1 bis 6 definiert ist, in einer zur Herbeiführung männlicher Sterilität ausreichenden Menge behandelt wird, der so behandelte Elternteil mit Pollen von einem zweiten unbehandelten fruchtbaren männlichen Elternteil bestäubt wird, der behandelte bestäubte Elternteil reifen gelassen wird, bis Hybridsamen gebildet ist, und der Hybridsamen geerntet wird.

9. Hybridsamen einen dikotylen Pflanze, hergestellt mit einem Verfahren nach Anspruch 8.

## Revendications

1. Utilisation, pour l'induction de la stérilité mâle chez une plante dicotylédone utilisée en agriculture ou en horticulture par traitement de la plante avant, pendant ou après méiose avec une quantité efficace pour provoquer une stérilité mâle chez la plante, d'un composé de formule : 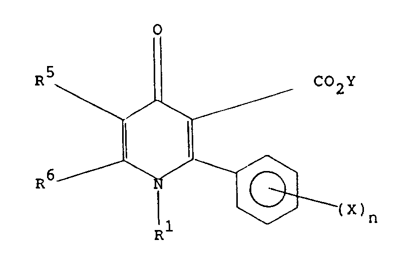 dans laquelle R¹ représente un groupe alkyle en C₁ à C₆ ou alcényle en C₂ à C₆, chacun facultativement substitué avec un groupe choisi entre les groupes hydroxy, carboxy, carboxylate, phényle et phényle substitué avec jusqu'à deux substituants identiques ou différents choisis entre des groupes halogéno, méthyle, éthyle, méthoxy, éthoxy, trifluorométhyle, nitro et cyano ;
R⁵ représente l'hydrogène, un groupe alkyle en C₁ à C₆ ou un halogène ;
R⁶ représente l'hydrogène ou un groupe alkyle en C₁ à C₆ ;
X représente un halogène, un groupe trihalogénométhyle, alkyle en C₁ à C₆, nitro, cyano ou alkoxy en C₁ à C₆ ;
n est égal à 0 ou à un nombre entier de 1 à 3 ; et
Y représente l'hydrogène ou un groupe alkyle en C₁ à C₆ ;
et des sels d'addition d'acides agronomiquement acceptables ; et des carboxylates de composés de formule (I) dans laquelle Y représente l'hydrogène, renfermant un cation agronomiquement acceptable.

2. Utilisation suivant la revendication 1 d'un composé de formule : 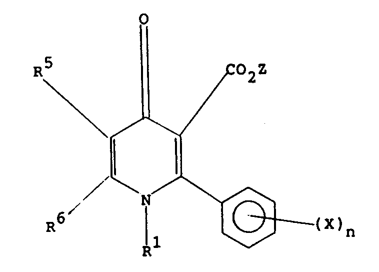 dans laquelle R¹, R⁵, R⁶ x et n répondent aux définitions mentionnées dans la revendication 1 et Z représente l'hydrogène ou un métal alcalin, et de ses sels d'addition d'acides agronomiquement acceptables.

3. Utilisation suivant la revendication 1 ou 2 d'un composé répondant à la définition figurant dans cette revendication, dans lequel R¹ représente un groupe alkyle en C₁ à C₃, R⁵ représente l'hydrogène, R⁶ représente un groupe alkyle en C₁ à C₃, X représente le chlore ou le fluor ; et n est égal à 0, 1 ou 2.

4. Utilisation suivant la revendication 3 d'un composé répondant à la définition figurant dans cette revendication, dans lequel R¹ représente un groupe méthyle ou éthyle, R⁶ représente un groupe méthyle et Z représente le sodium ou le potassium.

5. Utilisation suivant la revendication 4 d'un composé répondant à la définition figurant dans cette revendication, dans lequel R¹ représente un groupe éthyle et (X)ₙ représente l'hydrogène, un groupe 4-chloro, 3-chloro, 3,4-dichloro ou 3-fluoro.

6. Utilisation suivant la revendication 5 d'un composé répondant à la définition figurant dans cette revendication, dans lequel (X)ₙ représente un groupe 4-chloro et Z représente le potassium.

7. Utilisation suivant l'une quelconque des revendications précédentes, dans laquelle la plante dicotylédone est le tournesol.

8. Procédé de production de semences hybrides de plantes dicotylédones par croisement de deux souches mères différentes de ces plantes, procédé consistant à traiter un premier parent présentant une fertilité mâle avant, pendant ou après méiose avec un composé répondant à la définition suivant l'une quelconque des revendications 1 à 6 en une quantité suffisante pour induire une stérilité mâle, à provoquer la pollinisation du parent ainsi traité avec le pollen provenant d'un second parent non traité présentant une fertilité mâle, à laisser le parent pollinisé traité subir une maturation jusqu'à formation de semences hybrides, et à recueillir les semences hybrides.

9. Semences hybrides de plantes dicotylédones produites par un procédé suivant la revendication 8.
